# EUROPÄISCHE PATENTSCHRIFT

(11) **EP 3 024 691 B1**
(45) Veröffentlichungstag und Bekanntmachung des Hinweises auf die Patenterteilung: **13.06.2018**
(21) Anmeldenummer: 14739363.1
(22) Anmeldetag: 23.06.2014
(51) Int. Cl.: B60R 16/037, G08C 17/02, B60N 2/02

(54) **VERFAHREN ZUR EINSTELLUNG EINES FAHRZEUGSITZES UND SYSTEM ZUR EINSTELLUNG EINES FAHRZEUGSITZES**
A METHOD FOR ADJUSTING A VEHICLE SEAT AND SYSTEM FOR ADJUSTING A VEHICLE SEAT
PROCÉDÉ DE FABRICATION D'UN SIÈGE DE VÉHICULE ET SYSTÈME DE RÉGLAGE D'UN SIÈGE DE VÉHICULE

(30) Priorität: 26.07.2013 DE 102013012388
(43) Veröffentlichungstag der Anmeldung: 01.06.2016
(73) Patentinhaber: Adient Luxembourg Holding S.à r.l., 1855 Luxembourg (LU)
(72) Erfinder: LANGE-MAO, Wei, 58135 Hagen (DE)
(74) Vertreter: Liedhegener, Ralf
(86) Internationale Anmeldenummer: PCT/EP2014/063133
(87) Internationale Veröffentlichungsnummer: WO 2015/010840

(56) Entgegenhaltungen:
- DE-A1-102005 026 849
- DE-A1-102010 005 883

## Beschreibung

### Stand der Technik

Die vorliegende Erfindung geht aus von einem Verfahren zur Einstellung eines Fahrzeugsitzes und von einem System zur Einstellung eines Fahrzeugsitzes, insbesondere eines Kraftfahrzeuges.

Verfahren zur Einstellung von Fahrzeugsitzen, insbesondere Kraftfahrzeugsitzen sind allgemein bekannt. So ist es beispielsweise bekannt, zur Einstellung eines Fahrzeugsitzes für einen Benutzer eines Fahrzeugs einen elektrischen Antrieb zur mechanischen Verstellung des Fahrzeugsitzes vorzusehen.

Ein solcher Fahrzeugsitz ist typischerweise gemäß wenigstens einer Einstellrichtung, bevorzugt jedoch gemäß einer Mehrzahl von Einstellrichtungen, hinsichtlich seiner Mechanik elektrisch verstellbar vorgesehen, d.h. mittels typischerweise Elektromotoren oder sonstiger Aktuatoren.

So sind Fahrzeugsitze mit einer Vielzahl von Einstellrichtungen bekannt, beispielsweise
-- zur Einstellung der Sitzlängsposition des Fahrzeugsitzes und/oder
-- zur Einstellung der Sitzhöhe des Fahrzeugsitzes und/oder
-- zur Einstellung der Sitzneigung (d.h. der Neigung der Sitzfläche) des Fahrzeugsitzes und/oder
-- zur Einstellung der Lehnenneigung des Fahrzeugsitzes und/oder
-- zur Einstellung der Höhenposition der Kopfstützes des Fahrzeugsitzes und/oder
-- zur Einstellung der Längsposition der Kopfstützes des Fahrzeugsitzes und/oder
-- zur Einstellung der Sitzlänge (d.h. der Länge bzw. der Auflagelänge der Sitzfläche) des Fahrzeugsitzes.

Normalerweise ist ein solcher Fahrzeugsitz entlang einer Einstellrichtung in zwei entgegengesetzt gerichtete Orientierungen einstellbar, d.h. beispielsweise zur Einstellung der Sitzlängsposition des Fahrzeugsitzes sowohl in eine (gegenüber beispielsweise einer mittleren Sitzlängsposition) vordere (bzw. weiter vorne angeordnete) Sitzlängsposition einstellbar als auch in eine (gegenüber der mittleren Sitzlängsposition) hintere (bzw. weiter hinten angeordnete) Sitzlängsposition einstellbar, so dass üblicherweise eine Doppelverstellbarkeit pro Einstellrichtung angenommen wird.

Gerade eine solche Mehrfachverstellbarkeit bringt es jedoch mit sich, dass die Einstellung genau derjenigen von einem Benutzer gewünschten bzw. der optimal an die Bedürfnisse des Benutzers angemessenen Sitzeinstellung des Fahrzeugsitzes aufwändig ist bzw. die Benutzung der Sitzverstellung (typischerweise mittels am Fahrzeug vorgesehener - d.h. in der Regel im Innenraum des Fahrzeugs angeordneter - Betätigungseinrichtungen) schwierig und/oder verwirrend ist oder von einem Benutzer als gefühlt verwirrend oder schwierig erscheinen kann, was häufig dazu führt, dass die Benutzung einer nicht optimalen oder einer nicht optimal an die Bedürfnisse des Benutzers angepassten Sitzeinstellung des Fahrzeugsitzes durch den Benutzer ohne Änderung der Sitzeinstellung des Fahrzeugsitzes fortdauert, was nachteilig für das Benutzungserlebnis des Benutzers - insbesondere unter Komfortgesichtspunkten - des Fahrzeugsitzes ist.

Beispiele solcher Fahrzeugsitze und damit verknüpfter Systeme zur Verstellbarkeit insbesondere mittels drahtloser Steuerungen stellen die DE 10 2010 005 883 A1 und die DE 10 2005 026 849 A1 dar.

### Offenbarung der Erfindung

Es ist daher eine Aufgabe der vorliegenden Erfindung, ein Verfahren zur Einstellung eines Fahrzeugsitzes und ein System zur Einstellung eines Fahrzeugsitzes zur Verfügung zu stellen, welche die Einstellung der richtigen bzw. der optimalen bzw. der komfortabelsten Sitzeinstellung des Fahrzeugsitzes in besonders einfacher, komfortabler und wenig verwirrender bzw. schwieriger bzw. gefühlt wenig verwirrender Weise ermöglicht und welche vergleichsweise einfach und kostengünstig bereitstellbar ist.

Gelöst wird diese Aufgabe durch ein Verfahren gemäß Anspruch 1 zur Einstellung eines Fahrzeugsitzes für einen Benutzer eines Fahrzeugs, insbesondere für ein Kraftfahrzeug, wobei der Fahrzeugsitz gemäß wenigstens einer Einstellrichtung zur elektrischen Einstellung konfiguriert ist, wobei der Fahrzeugsitz und/oder das Fahrzeug eine Steuereinheit aufweist, wobei der Steuereinheit wenigstens eine Antenneneinheit zum drahtlosen Empfang einer mit der Einstellung des Fahrzeugsitzes für den Benutzer zusammenhängenden Information zugeordnet ist, wobei das Verfahren zur Einstellung des Fahrzeugsitzes u.a. die folgenden Verfahrensschritte umfasst:
-- in einem ersten Verfahrensschritt wird dem Fahrzeugsitz ein Telekommunikationsgerät zugeordnet,
-- in einem zweiten Verfahrensschritt wird die Eingabe einer Information an dem Telekommunikationsgerät vorgenommen oder es wird eine Information in eine Speichervorrichtung des Telekommunikationsgeräts eingespeichert,
-- in einem dem zweiten Verfahrensschritt nachfolgenden dritten Verfahrensschritt wird die Information von dem Telekommunikationsgerät an die Steuereinheit des Fahrzeugsitzes oder des Fahrzeugs mittels einer Funkübertragung drahtlos oder mittels eines drahtgebundenen Übertragungsmittels übertragen,
-- in einem dem dritten Verfahrensschritt nachfolgenden vierten Verfahrensschritt wird der Fahrzeugsitz elektrisch eingestellt.

Hierdurch ist es in besonders einfacher Weise - nämlich insbesondere durch die Eingabe lediglich einer einzigen sich auf den Benutzer (bzw. selbstverständlich alternativ auch auf die Benutzerin; im Kontext des vorliegenden Dokuments wird die grammatikalisch männliche Form benutzt, wobei dies jedoch nicht als die weibliche Form exkludierend auszulegen ist) beziehenden Information oder aber auch durch die Eingabe sowohl der einen als auch einer weiteren sich auf den Benutzer beziehenden Information - möglich, zu einer möglichst optimalen Sitzeinstellung für die Benutzung des Fahrzeugsitzes durch den Benutzer zu gelangen.

Bei der Zuordnung des Telekommunikationsgeräts zum Fahrzeugsitz handelt es sich beispielsweise um einen Paarungsschritt, wie etwa dem sog. "Pairing" (d.h. den Prozess der erstmaligen Verbindungsaufnahme zwischen zwei Bluetooth-Geräten) bei Benutzung der Bluetooth-Funkverbindungstechnologie zur Durchführung der drahtlosen Funkübertragung zwischen dem Telekommunikationsgerät einerseits und der Steuereinheit im Fahrzeugsitz bzw. im Fahrzeug andererseits. Alternativen zur Nutzung der Bluetooth-Funkverbindungstechnologie zur Durchführung der drahtlosen Funkübertragung zwischen dem Telekommunikationsgerät einerseits und der Steuereinheit im Fahrzeugsitz bzw. im Fahrzeug andererseits bestehen darin, eine WLAN-Funkverbindungstechnologie (Wireless Local Area Network) zu verwenden oder andere drahtlose Übertragungstechnologien bzw. drahtlose Funkübertragungsstandards.

Das Telekommunikationsgerät ist ein bi-direktionales Gerät, d.h. das Gerät empfängt auch die Information, wie z.B. Sitzposition, für die weitere Verarbeitung der Sitzpersonalisierung.

Vorteilhafte Ausgestaltungen und Weiterbildungen der Erfindung sind den Unteransprüchen sowie der Beschreibung unter Bezugnahme auf die Zeichnungen entnehmbar.

Erfindungsgemäß ist es insbesondere bevorzugt vorgesehen, dass mittels einer Notausfunktionalität die im vierten Verfahrensschritt erfolgende elektrische Verstellung des Fahrzeugsitzes gestoppt oder zumindest angehalten bzw. unterbrochen werden kann. Hierdurch wird das Sicherheitsniveau mit Blick auf eine mögliche Fehlbedienung (etwa durch Kinder) erhöht.

Erfindungsgemäß ist es insbesondere bevorzugt, dass der zweite Verfahrensschritt zeitlich nach dem ersten Verfahrensschritt durchgeführt wird, wobei der zweite Verfahrensschritt insbesondere die Eingabe der Information am Telekommunikationsgerät umfasst.

Durch die Durchführung des zweiten Verfahrensschritts zeitlich nach dem ersten Verfahrensschritt erfolgt insbesondere die Eingabe der Information am Telekommunikationsgerät nach der Durchführung der Zuordnung des Telekommunikationsgeräts zum Fahrzeugsitz.

Gemäß einer alternativen Ausführungsform der vorliegenden Erfindung ist es erfindungsgemäß ebenfalls möglich und bevorzugt, dass der zweite Verfahrensschritt zeitlich vor dem ersten Verfahrensschritt durchgeführt wird, wobei der zweite Verfahrensschritt insbesondere die Einspeicherung der Information in die Speichervorrichtung des Telekommunikationsgeräts umfasst.

Hierdurch wird es insbesondere ermöglicht, dass die Einspeicherung der Information in das Telekommunikationsgerät zeitlich vor der Zuordnung des Telekommunikationsgeräts zu dem Fahrzeugsitz erfolgt. Insbesondere kann die Einspeicherung der Information in der Speichervorrichtung des Telekommunikationsgeräts auch dauerhaft erfolgen, beispielsweise durch feste Abspeicherung der Information in dem als Fahrzeugschlüssel bzw. elektronischem Fahrzeugschlüssel ausgestalteten Telekommunikationsgerät. Es ist jedoch erfindungsgemäß ebenso für den Fall der Eingabe der Information in das Telekommunikationsgerät möglich, dass die Eingabe der Information (d.h. der zweite Verfahrensschritt) zeitlich vor dem ersten Verfahrensschritt, d.h. der Zuordnung des Telekommunikationsgeräts zum Fahrzeugsitz, erfolgt.

Erfindungsgemäß ist es vorgesehen, dass die mit der Einstellung des Fahrzeugsitzes für den Benutzer zusammenhängende Information eine mit der Körpergröße des Benutzers zusammenhängende oder mit den Körperproportionen des Benutzers zusammenhängende oder mit der bevorzugten Sitzpositionsart zusammenhängende Information ist, insbesondere der Körpergröße des Benutzers oder der Stammlänge des Benutzers oder einer bevorzugten Komfortposition bzw. einer bevorzugten Sportposition entspricht. Hierbei wird im Rahmen der vorliegenden Erfindung bei einem auf einer (in der Regel ebenen) Sitzfläche aufrecht sitzenden Benutzer unter dem Begriff Stammlänge des Benutzers das Maß von der Sitzfläche bis zur Oberkante des Kopfes des Benutzers verstanden. Alternativ dazu kann erfindungsgemäß ferner auch herangezogen werden, ob es sich bei dem Benutzer um einen sogenannten Sitzzwerg oder um einen sogenannten Sitzriesen oder um eine normal sitzende Person handelt. Hierbei wird unter Sitzriese typischerweise die Situation verstanden, dass eine Person einen vergleichsweise großen (bzw. langen) Oberkörper (vom Kopf bis zur Hüfte) und vergleichsweise kleine (bzw. kurze) Beine aufweist, während unter Sitzzwerg typischerweise die Situation verstanden wird, dass eine Person einen vergleichsweise kleinen (bzw. kurzen) Oberkörper und vergleichsweise große (bzw. lange) Beine aufweist. Ferner wird im Rahmen der vorliegenden Erfindung unter der bevorzugten Sitzpositionsart verstanden, ob es durch den Benutzer tendenziell bevorzugt ist, eine eher aufrechte und/oder tiefere Sitzposition einzunehmen (Sportposition) oder eher eine eher weniger aufrechte und/oder höhere Sitzposition (Komfortposition).

Hierdurch ist die Benutzung einer besonders einfach zugänglichen und insbesondere einer einem Benutzer in der Regel relativ zuverlässig bekannte Information in vorteilhafter Weise möglich. Alternativen zur Nutzung der Körpergröße oder einer mit der Körpergröße des Benutzers zusammenhängenden Information bestehen in der Nutzung des Gewichts des Benutzers und/oder des Geschlechts des Benutzers und/oder des Alters des Benutzers.

Erfindungsgemäß ist es insbesondere bevorzugt, dass die mit der Körpergröße des Benutzers zusammenhängende oder mit den Körperproportionen des Benutzers zusammenhängende oder mit der bevorzugten Sitzpositionsart zusammenhängende Information die alleinige benutzerspezifische und mit der Einstellung des Fahrzeugsitzes für den Benutzer zusammenhängende, durch das Telekommunikationsgerät zur Steuereinheit des Fahrzeugsitzes oder des Fahrzeugs übertragene Information ist.

Hierdurch ist es in besonders vorteilhafter Weise möglich, dass keine optische Aufnahme des Benutzers durch das Telekommunikationsgerät durchgeführt werden muss, insbesondere keine Fotografie des Benutzers (bzw. mehrere Fotografien des Benutzers).

Ferner ist es erfindungsgemäß bevorzugt vorgesehen, dass neben der mit der Körpergröße des Benutzers zusammenhängenden Information - insbesondere während des zweiten Verfahrensschritts - die Eingabe einer weiteren Information an dem Telekommunikationsgerät oder die Einspeicherung einer weiteren Information in eine Speichervorrichtung des Telekommunikationsgeräts vorgenommen wird, wobei die weitere Information benutzerspezifisch und mit der Einstellung des Fahrzeugsitzes für den Benutzer zusammenhängend ist und durch das Telekommunikationsgerät zur Steuereinheit des Fahrzeugsitzes oder des Fahrzeugs übertragen wird.

Hierdurch ist es erfindungsgemäß in besonders vorteilhafter Weise möglich, dass eine weitere benutzerspezifische Information zur optimalen Sitzeinstellung des Fahrzeugsitzes herangezogen wird.

Ein weiterer Gegenstand der vorliegenden Erfindung betrifft ein System gemäß Anspruch 7 zur Einstellung eines Fahrzeugsitzes für einen Benutzer eines Fahrzeugs, insbesondere für ein Kraftfahrzeug, wobei der Fahrzeugsitz gemäß wenigstens einer Einstellrichtung zur elektrischen Einstellung konfiguriert ist, wobei das System den Fahrzeugsitz des Fahrzeugs umfasst, wobei der Fahrzeugsitz und/oder das Fahrzeug eine Steuereinheit aufweist, wobei der Steuereinheit wenigstens eine Antenneneinheit zum drahtlosen Empfang einer mit der Einstellung des Fahrzeugsitzes für den Benutzer zusammenhängenden Information zugeordnet ist, wobei das System ferner ein dem Fahrzeugsitz zumindest zeitweise zugeordnetes Telekommunikationsgerät umfasst, wobei das Telekommunikationsgerät zur Eingabe einer Information konfiguriert ist oder zur Einspeicherung in eine Speichervorrichtung des Telekommunikationsgeräts konfiguriert ist, wobei das Telekommunikationsgerät ferner zur drahtlosen Funkübertragung der Information an die Steuereinheit des Fahrzeugsitzes oder des Fahrzeugs konfiguriert ist, wobei der Fahrzeugsitz derart konfiguriert ist, dass in Abhängigkeit der Information der Fahrzeugsitz elektrisch eingestellt wird.

Erfindungsgemäß ist es insbesondere bevorzugt vorgesehen, dass das System ein Notausmittel aufweist, wobei bei Aktivierung des Notausmittels (insbesondere einer Notaustaste) die beginnende bzw. erfolgende elektrische Verstellung des Fahrzeugsitzes gestoppt oder zumindest angehalten bzw. unterbrochen werden kann. Hierdurch wird das Sicherheitsniveau mit Blick auf eine mögliche Fehlbedienung (etwa durch Kinder) erhöht.

Erfindungsgemäß ist es ferner vorgesehen, dass die mit der Einstellung des Fahrzeugsitzes für den Benutzer zusammenhängende Information eine mit der Körpergröße des Benutzers zusammenhängende Information ist, insbesondere der Körpergröße des Benutzers entspricht.

Weiterhin ist es erfindungsgemäß ebenfalls vorgesehen, dass die mit der Körpergröße des Benutzers zusammenhängende Information die alleinige benutzerspezifische und mit der Einstellung des Fahrzeugsitzes für den Benutzer zusammenhängende, durch das Telekommunikationsgerät zur Steuereinheit des Fahrzeugsitzes oder des Fahrzeugs übertragene Information ist.

Erfindungsgemäß ist es weiterhin auch bevorzugt, dass das Telekommunikationsgerät derart konfiguriert ist, dass neben der mit der Körpergröße des Benutzers zusammenhängenden Information die Eingabe einer weiteren Information an dem Telekommunikationsgerät oder die Einspeicherung einer weiteren Information in eine Speichervorrichtung des Telekommunikationsgeräts vorgenommen wird, wobei das Telekommunikationsgerät ferner derart konfiguriert ist, dass die weitere Information benutzerspezifisch und mit der Einstellung des Fahrzeugsitzes für den Benutzer zusammenhängend ist und durch das Telekommunikationsgerät zur Steuereinheit des Fahrzeugsitzes oder des Fahrzeugs übertragen wird.

Weitere Einzelheiten, Merkmale und Vorteile der Erfindung ergeben sich aus den Zeichnungen sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Zeichnungen

- **Figur 1**: zeigt in den Teilfiguren 1a, 1b, 1c, 1d und 1e eine schematische Darstellung verschiedener möglicher Alternativen der Eingabe der mit der Einstellung des Fahrzeugsitzes für den Benutzer zusammenhängenden Information.
- **Figur 2**: zeigt eine schematische Darstellung eines erfindungsgemäßen Fahrzeugsitzes und eines Telekommunikationsgeräts als Teil eines erfindungsgemäßen Systems.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

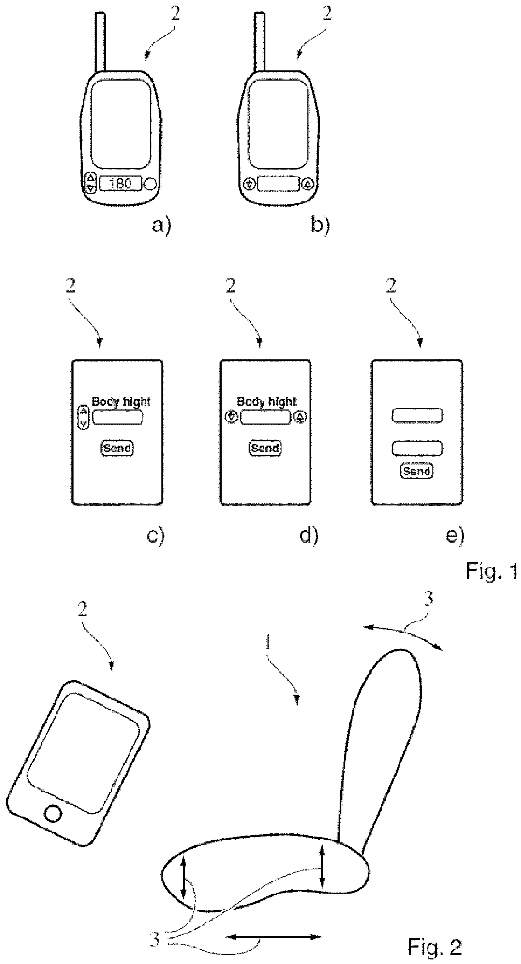

In der Figur 1 sind schematisch in den Teilfiguren 1a, 1b, 1c, 1d und 1e jeweils eine Darstellung verschiedener möglicher Alternativen der Eingabe der mit der Einstellung des Fahrzeugsitzes für den Benutzer zusammenhängenden Information in ein Telekommunikationsgerät dargestellt. Hierbei zeigen die Teilfiguren 1a und 1b jeweils den Fall eines Telekommunikationsgeräts in Form eines elektronischen Fahrzeugschlüssels, wobei der elektronische Fahrzeugschlüssel sowohl eine Anzeigeeinheit als auch eine Mehrzahl von Betätigungselementen aufweist. Die Teilfiguren 1c, 1d und 1e zeigen jeweils den Fall eines Telekommunikationsgeräts in Form eines tragbaren Telekommunikationsendgeräts, insbesondere eines intelligenten Telefons (smartphones) wobei das tragbare Telekommunikationsendgerät sowohl eine Anzeigeeinheit als auch eine Mehrzahl von Betätigungselementen aufweist oder aber die Betätigungselemente in Form eines berührungsempfindlichen Bildschirms in die Anzeigeeinheit (mittels sogenannter Softbuttons) integriert sind.

Durch Betätigung der Betätigungselemente ist es einem Benutzer möglich, den auf der Anzeigeeinheit angezeigten Wert der Körpergröße des Benutzers (beispielsweise dargestellt in Zentimetern (cm)) durch ein erstes Betätigungselement, welches zur Erhöhung des Werts der Körpergröße des Benutzers vorgesehen ist (sogenannte Plus-Taste), und durch ein zweites Betätigungselement, welches zur Erniedrigung des Werts der Körpergröße des Benutzers vorgesehen ist (sogenannte Minus-Taste) zu verändern. Beispielsweise durch gleichzeitige Betätigung beider Betätigungselemente (insbesondere das gleichzeitige Betätigen beider Betätigungselemente während eines Zeitintervalls, welches eine gewisse vorgegebene Dauer oder Mindestbetätigungsdauer übersteigt), wird der angezeigte Wert der Körpergröße des Benutzers (in der Speichervorrichtung des Telekommunikationsgeräts) eingespeichert und/oder zur Steuereinheit des Fahrzeugsitzes oder des Fahrzeugs mittels einer Funkübertragung drahtlos übertragen.

In Figur 2 ist schematisch eine Darstellung eines erfindungsgemäßen Fahrzeugsitzes 1 und eines Telekommunikationsgeräts 2 als Teil eines erfindungsgemäßen Systems dargestellt. Das Telekommunikationsgerät 2 wird in einem ersten Verfahrensschritt dem Fahrzeugsitz 1 zugeordnet. In einem zweiten Verfahrensschritt wird die Eingabe der Information an dem Telekommunikationsgerät 2 vorgenommen oder es wird die Information in eine Speichervorrichtung des Telekommunikationsgeräts 2 eingespeichert. In einem dem zweiten Verfahrensschritt nachfolgenden dritten Verfahrensschritt wird die Information von dem Telekommunikationsgerät 2 an die Steuereinheit des Fahrzeugsitzes 1 oder des Fahrzeugs mittels einer Funkübertragung drahtlos übertragen. In einem dem dritten Verfahrensschritt nachfolgenden vierten Verfahrensschritt wird der Fahrzeugsitz 1 elektrisch eingestellt. Hierbei ist es vorgesehen, dass der Fahrzeugsitz eine Mehrzahl von verschiedenen Einstellrichtungen 3 aufweist, beispielsweise zur Einstellung der Sitzlängsposition des Fahrzeugsitzes und/oder zur Einstellung der Sitzhöhe des Fahrzeugsitzes und/oder zur Einstellung der Sitzneigung (d.h. der Neigung der Sitzfläche) des Fahrzeugsitzes und/oder zur Einstellung der Lehnenneigung des Fahrzeugsitzes und/oder zur Einstellung der Höhenposition der Kopfstütze des Fahrzeugsitzes und/oder zur Einstellung der Längsposition der Kopfstütze des Fahrzeugsitzes und/oder zur Einstellung der Sitzlänge (d.h. der Länge bzw. der Auflagelänge der Sitzfläche) des Fahrzeugsitzes. Eine Mehrzahl solcher verschiedener Einstellrichtungen 3 ist in Figur 2 schematisch und lediglich beispielhaft dargestellt.

### BEZUGSZEICHENLISTE

- 1: Fahrzeugsitz
- 2: Telekommunikationsgerät
- 3: Einstellrichtung

## Patentansprüche

1. Verfahren zur Einstellung eines Fahrzeugsitzes (1) für einen Benutzer eines Fahrzeugs, insbesondere für ein Kraftfahrzeug,
wobei der Fahrzeugsitz (1) gemäß wenigstens einer Einstellrichtung (3) zur elektrischen Einstellung konfiguriert ist,
wobei der Fahrzeugsitz (1) und/oder das Fahrzeug eine Steuereinheit aufweist, wobei der Steuereinheit wenigstens eine Antenneneinheit zum drahtlosen Empfang einer mit der Einstellung des Fahrzeugsitzes (1) für den Benutzer zusammenhängenden Information zugeordnet ist,
wobei das Verfahren zur Einstellung des Fahrzeugsitzes (1) die folgenden Verfahrensschritte umfasst:
-- in einem ersten Verfahrensschritt wird dem Fahrzeugsitz (1) ein Telekommunikationsgerät (2) zugeordnet,
-- in einem zweiten Verfahrensschritt wird die Eingabe einer Information an dem Telekommunikationsgerät (2) vorgenommen oder es wird eine Information in eine Speichervorrichtung des Telekommunikationsgeräts (2) eingespeichert,
-- in einem dem zweiten Verfahrensschritt nachfolgenden dritten Verfahrensschritt wird die Information von dem Telekommunikationsgerät (2) an die Steuereinheit des Fahrzeugsitzes (1) oder des Fahrzeugs mittels einer Funkübertragung drahtlos Übertragungsmittels übertragen,
-- in einem dem dritten Verfahrensschritt nachfolgenden vierten Verfahrensschritt wird der Fahrzeugsitz (1) elektrisch eingestellt, wobei die mit der Einstellung des Fahrzeugsitzes (1) für den Benutzer zusammenhängende Information eine mit der Körpergröße des Benutzers zusammenhängende Information ist, insbesondere der Körpergröße des Benutzers entspricht, wobei die mit der Körpergröße des Benutzers zusammenhängende Information die alleinige benutzerspezifische und mit der Einstellung des Fahrzeugsitzes (1) für den Benutzer zusammenhängende, durch das Telekommunikationsgerät (2) zur Steuereinheit des Fahrzeugsitzes oder des Fahrzeugs übertragene Information ist, **dadurch gekennzeichnet, dass** die Eingabe der Information bezüglich des Werts der Körpergröße des Benutzers über ein erstes Betätigungselement, welches zur Erhöhung des Werts der Körpergröße des Benutzers vorgesehen ist, und durch ein zweites Betätigungselement erfolgt, welches zur Erniedrigung des Werts der Körpergröße des Benutzers vorgesehen ist.

2. Verfahren nach Anspruch 1, **dadurch gekennzeichnet, dass** der zweite Verfahrensschritt zeitlich nach dem ersten Verfahrensschritt durchgeführt wird, wobei der zweite Verfahrensschritt insbesondere die Eingabe der Information am Telekommunikationsgerät (2) umfasst.

3. Verfahren nach Anspruch 1, **dadurch gekennzeichnet, dass** der zweite Verfahrensschritt zeitlich vor dem ersten Verfahrensschritt durchgeführt wird, wobei der zweite Verfahrensschritt insbesondere die Einspeicherung der Information in die Speichervorrichtung des Telekommunikationsgeräts (2) umfasst.

4. Verfahren nach einem der vorhergehenden Ansprüche, **dadurch gekennzeichnet, dass** die mit der Einstellung des Fahrzeugsitzes (1) für den Benutzer zusammenhängende Information eine mit der Körpergröße des Benutzers zusammenhängende oder mit den Körperproportionen des Benutzers zusammenhängende oder mit der bevorzugten Sitzpositionsart zusammenhängende Information ist, insbesondere der Körpergröße des Benutzers oder der Stammlänge des Benutzers oder einer bevorzugten Komfortposition bzw. einer bevorzugten Sportposition entspricht.

5. Verfahren nach einem der vorhergehenden Ansprüche, **dadurch gekennzeichnet, dass** die mit der Körpergröße des Benutzers zusammenhängende oder mit den Körperproportionen des Benutzers zusammenhängende oder mit der bevorzugten Sitzpositionsart zusammenhängende Information die alleinige benutzerspezifische und mit der Einstellung des Fahrzeugsitzes (1) für den Benutzer zusammenhängende, durch das Telekommunikationsgerät (2) zur Steuereinheit des Fahrzeugsitzes oder des Fahrzeugs übertragene Information ist.

6. Verfahren nach einem der vorhergehenden Ansprüche, **dadurch gekennzeichnet, dass** neben der mit der Körpergröße des Benutzers zusammenhängenden Information - insbesondere während des zweiten Verfahrensschritts - die Eingabe einer weiteren Information an dem Telekommunikationsgerät (2) oder die Einspeicherung einer weiteren Information in eine Speichervorrichtung des Telekommunikationsgeräts (2) vorgenommen wird, wobei die weitere Information benutzerspezifisch und mit der Einstellung des Fahrzeugsitzes (1) für den Benutzer zusammenhängend ist und durch das Telekommunikationsgerät (2) zur Steuereinheit des Fahrzeugsitzes oder des Fahrzeugs übertragen wird.

7. System zur Einstellung eines Fahrzeugsitzes (1) für einen Benutzer eines Fahrzeugs, insbesondere für ein Kraftfahrzeug,
wobei der Fahrzeugsitz (1) gemäß wenigstens einer Einstellrichtung (3) zur elektrischen Einstellung konfiguriert ist,
wobei das System den Fahrzeugsitz (1) des Fahrzeugs umfasst,
wobei der Fahrzeugsitz (1) und/oder das Fahrzeug eine Steuereinheit aufweist, wobei der Steuereinheit wenigstens eine Antenneneinheit zum drahtlosen Empfang einer mit der Einstellung des Fahrzeugsitzes (1) für den Benutzer zusammenhängenden Information zugeordnet ist,
wobei das System ferner ein dem Fahrzeugsitz (1) zumindest zeitweise zugeordnetes Telekommunikationsgerät (2) umfasst,
wobei das Telekommunikationsgerät (2) zur Eingabe einer Information konfiguriert ist oder zur Einspeicherung in eine Speichervorrichtung des Telekommunikationsgeräts (2) konfiguriert ist,
wobei das Telekommunikationsgerät (2) ferner zur drahtlosen Funkübertragung der Information an die Steuereinheit des Fahrzeugsitzes (1) oder des Fahrzeugs konfiguriert ist,
wobei der Fahrzeugsitz (1) derart konfiguriert ist, dass in Abhängigkeit der Information der Fahrzeugsitz (1) elektrisch eingestellt wird,.
wobei die mit der Einstellung des Fahrzeugsitzes (1) für den Benutzer zusammenhängende Information eine mit der Körpergröße des Benutzers zusammenhängende Information ist, insbesondere der Körpergröße des Benutzers entspricht,
wobei die mit der Körpergröße des Benutzers zusammenhängende Information die alleinige benutzerspezifische und mit der Einstellung des Fahrzeugsitzes (1) für den Benutzer zusammenhängende, durch das Telekommunikationsgerät (2) zur Steuereinheit des Fahrzeugsitzes oder des Fahrzeugs übertragene Information ist, **dadurch gekennzeichnet, dass** das System ein erstes Betätigungselement umfasst, welches dazu ausgebildet ist, eine Eingabe einer Information bezüglich eines Werts der Körpergröße des Benutzers zu empfangen, wobei das erste Betätigungselement ferner zur Erhöhung des Werts der Körpergröße des Benutzers vorgesehen ist, wobei das System ferner ein zweites Betätigungselement umfasst, welches zur Erniedrigung des Werts der Körpergröße des Benutzers vorgesehen ist.

8. System nach Anspruch 7, **dadurch gekennzeichnet, dass** das Telekommunikationsgerät (2) derart konfiguriert ist, dass neben der mit der Körpergröße des Benutzers zusammenhängenden Information die Eingabe einer weiteren Information an dem Telekommunikationsgerät (2) oder die Einspeicherung einer weiteren Information in eine Speichervorrichtung des Telekommunikationsgeräts (2) vorgenommen wird, wobei das Telekommunikationsgerät (2) ferner derart konfiguriert ist, dass die weitere Information benutzerspezifisch und mit der Einstellung des Fahrzeugsitzes (1) für den Benutzer zusammenhängend ist und durch das Telekommunikationsgerät (2) zur Steuereinheit des Fahrzeugsitzes oder des Fahrzeugs übertragen wird.

9. System nach einem der Ansprüche 7 oder 8, **dadurch gekennzeichnet, dass** das Telekommunikationsgerät (2) ein Fahrzeugschlüssel des Fahrzeugs oder ein tragbares Telekommunikationsendgerät, insbesondere ein intelligentes Telefon / smartphone ist.

## Claims

1. Method for adjusting a vehicle seat (1) for a user of a vehicle, in particular for a motor vehicle, wherein the vehicle seat (1) is configured in accordance with at least one adjusting direction (3) so as to be adjusted in an electrical manner, wherein the vehicle seat (1) and/or the vehicle comprises a control unit, wherein the control unit is allocated at least one antenna unit for receiving in a wireless manner information that is related to adjusting the vehicle seat (1) for the user,
wherein the method for adjusting the vehicle seat (1) includes the following method steps:
- in a first method step, a telecommunications device (2) is allocated to the vehicle seat (1),
- in a second method step, information is input into the telecommunications device (2) or information is stored in a storage device of the telecommunications device (2),
- in a third method step that follows the second method step, the information is transmitted by means of a radio transmission in a wireless manner transmission means from the telecommunications device (2) to the control unit of the vehicle seat (1) or the vehicle,
- in a fourth method step that follows the third method step, the vehicle seat (1) is adjusted in an electrical manner, wherein the information that is related to adjusting the vehicle seat (1) for the user is information that is related to the body size of the user, in particular corresponding to the body size of the user, wherein the information that is related to the body size of the user is the sole user-specific information that is related to adjusting the vehicle seat (1) for the user and that is transmitted by means of the telecommunications device (2) to the control unit of the vehicle seat or the vehicle, **characterized in that** the information relating to the value of the body size of the user is input by means of a first actuating element that is provided to increase the value of the body size of the user and by a second actuating element that is provided to lower the value of the body size of the user.

2. Method according to Claim 1, **characterized in that** the second method step is performed chronologically after the first method step, wherein the second method step in particular includes inputting the information to the telecommunications device (2).

3. Method according to Claim 1, **characterized in that** the second method step is performed chronologically prior to the first method step, wherein the second method step in particular comprises storing the information in the storage device of the telecommunications device (2).

4. Method according to any one of the preceding claims, **characterized in that** the information that is related to adjusting the vehicle seat (1) for the user is information that is related to the body size of the user or is information that is related to the body proportions of the user or is information that is related to the preferred seat position type, in particular the body size of the user or the torso length of the user or corresponds to a preferred comfort position or a preferred sport position.

5. Method according to any one of the preceding claims, **characterized in that** the information that is related to the body size of the user or that is related to the body proportions of the user or that is related to the preferred seat position type is the sole user-specific information that is related to adjusting the vehicle seat (1) for the user and that is transmitted by means of the telecommunications device (2) to the control unit of the vehicle seat or the vehicle.

6. Method according to any one of the preceding claims, **characterized in that** in addition to the information that is related to the body size of the user - in particular during the second method step - further information is input into the telecommunications device (2) or further information is stored in a storage device of the telecommunications device (2), wherein the further information is user-specific and is related to adjusting the vehicle seat (1) for the user and is transmitted by means of the telecommunications device (2) to the control unit of the vehicle seat or the vehicle.

7. System for adjusting a vehicle seat (1) for a user of a vehicle, in particular for a motor vehicle,
wherein the vehicle seat (1) in accordance with at least one adjustment direction (3) is configured so as to be adjusted in an electrical manner,
wherein the system comprises the vehicle seat (1) of the vehicle,
wherein the vehicle seat (1) and/or the vehicle comprises a control unit, wherein the control unit is allocated at least one antenna unit for receiving in a wireless manner information that is related to adjusting the vehicle seat (1) for the user,
wherein the system in addition comprises at least one telecommunications device (2) that is at least temporarily allocated to the vehicle seat (1), wherein the telecommunications device (2) is configured so as to input information or to store information in a storage device of the telecommunications device (2),
wherein the telecommunications device (2) is in addition configured for radio transmitting information in a wireless manner to the control unit of the vehicle seat (1) or the vehicle, wherein the vehicle seat (1) is configured in such a manner that the vehicle seat (1) is adjusted in an electrical manner in dependence upon the information,
wherein the information that is related to adjusting the vehicle seat (1) for the user is information that is related to the body size of the user, in particular corresponding to the body size of the user,
wherein the information that is related to the body size of the user is the sole user-specific information that is related to adjusting the vehicle seat (1) for the user and that is transmitted by means of the telecommunications device (2) to the control unit of the vehicle seat or the vehicle,
**characterized in that** the system comprises a first actuating element that is designed to receive an input of information relating to a value of the body size of the user, wherein the first actuating element is further provided to increase the value of the body size of the user, wherein the system further comprises a second actuating element that is provided to lower the value of the body size of the user.

8. System according to Claim 7, **characterized in that** the telecommunications device (2) is configured in such a manner that in addition to the information that is related to the body size of the user, further information is input into the telecommunications device (2) or further information is stored in the storage device of the telecommunications device (2), wherein the telecommunications device (2) is in addition configured in such a manner that the further information is user-specific and is related to adjusting the vehicle seat (1) for the user and is transmitted by means of the telecommunications device (2) to the control unit of the vehicle seat or the vehicle.

9. System according to either one of Claims 7 and 8, **characterized in that** the telecommunications device (2) is a vehicle key of the vehicle or a portable telecommunications device, in particular an intelligent telephone/smart phone.

## Revendications

1. Procédé de réglage d'un siège de véhicule (1) pour un utilisateur d'un véhicule, en particulier pour un véhicule automobile,
dans lequel le siège de véhicule (1) est configuré pour le réglage électrique selon au moins un sens de réglage (3),
dans lequel le siège de véhicule (1) et/ou le véhicule présente(nt) une unité de commande, dans lequel au moins une unité d'antenne pour la réception sans fil d'une information liée au réglage du siège de véhicule (1) pour l'utilisateur correspond à l'unité de commande, dans lequel le procédé de réglage du siège de véhicule (1) comprend les étapes de procédé suivantes :
- dans une première étape de procédé, un appareil de télécommunications (2) est attribué au siège de véhicule (1),
- dans une deuxième étape de procédé, une information est saisie sur l'appareil de télécommunications (2) ou une information est enregistrée dans un dispositif de mémoire de l'appareil de télécommunications (2),
- dans une troisième étape de procédé consécutive à la deuxième étape de procédé, l'information est transmise par l'appareil de télécommunications (2) à l'unité de commande du siège de véhicule (1) ou du véhicule au moyen d'une transmission radio sans fil un moyen de transmission sans fil,
- dans une quatrième étape de procédé consécutive à la troisième étape de procédé, le siège de véhicule (1) est réglé électriquement, dans lequel l'information liée au réglage du siège de véhicule (1) pour l'utilisateur est une information liée à la taille de l'utilisateur, correspond en particulier à la taille de l'utilisateur, dans lequel l'information liée à la taille de l'utilisateur est la seule information spécifique à l'utilisateur et liée au réglage du siège de véhicule (1) pour l'utilisateur, transmise par l'appareil de télécommunications (2) à l'unité de commande du siège de véhicule ou du véhicule, **caractérisé en ce que** la saisie de l'information relative à la valeur de la taille de l'utilisateur est effectuée par le biais d'un premier élément d'actionnement qui est prévu pour augmenter la valeur de la taille de l'utilisateur et par le biais d'un second élément d'actionnement qui est prévu pour baisser la valeur de la taille de l'utilisateur.

2. Procédé selon la revendication 1, **caractérisé en ce que** la deuxième étape de procédé est effectuée temporellement après la première étape de procédé, dans lequel la deuxième étape de procédé comprend en particulier la saisie de l'information sur l'appareil de télécommunications (2).

3. Procédé selon la revendication 1, **caractérisé en ce que** la deuxième étape de procédé est effectuée temporellement avant la première étape de procédé, dans lequel la deuxième étape de procédé comprend en particulier l'enregistrement de l'information dans le dispositif de mémoire de l'appareil de télécommunications (2).

4. Procédé selon l'une des revendications précédentes, **caractérisé en ce que** l'information liée au réglage du siège de véhicule (1) pour l'utilisateur est une information liée à la taille de l'utilisateur ou liée aux proportions du corps de l'utilisateur ou liée au type de position de siège préférée, correspond en particulier à la taille de l'utilisateur ou à la longueur de l'utilisateur ou à une position de confort préférée, respectivement une position de sport préférée.

5. Procédé selon l'une des revendications précédentes, **caractérisé en ce que** l'information liée à la taille de l'utilisateur ou liée aux proportions du corps de l'utilisateur ou liée au type de position de siège préférée est la seule information spécifique à l'utilisateur et liée au réglage du siège de véhicule (1) pour l'utilisateur, transmise par l'appareil de télécommunications (2) à l'unité de commande du siège de véhicule ou du véhicule.

6. Procédé selon l'une des revendications précédentes, **caractérisé en ce qu'**outre l'information liée à la taille de l'utilisateur, en particulier pendant la deuxième étape de procédé, la saisie d'une information supplémentaire sur l'appareil de télécommunications (2) ou l'enregistrement d'une information supplémentaire dans un dispositif d'enregistrement de l'appareil de télécommunications (2) est effectué(e), dans lequel l'information supplémentaire est spécifique à l'utilisateur et liée au réglage du siège de véhicule (1) pour l'utilisateur et est transmise par l'appareil de télécommunications (2) à l'unité de commande du siège de véhicule ou du véhicule.

7. Système de réglage d'un siège de véhicule (1) pour un utilisateur d'un véhicule, en particulier pour un véhicule automobile,
dans lequel le siège de véhicule (1) est configuré pour le réglage électrique selon au moins un sens de réglage (3),
dans lequel le système comprend le siège de véhicule (1) du véhicule,
dans lequel le siège de véhicule (1) et/ou le véhicule présente(nt) une unité de commande, dans lequel au moins une unité d'antenne pour la réception sans fil d'une information liée au réglage du siège de véhicule (1) pour l'utilisateur correspond à l'unité de commande,
dans lequel le système comprend en outre un appareil de télécommunications (2) attribué au moins temporairement au siège de véhicule (1),
dans lequel l'appareil de télécommunications (2) est configuré pour saisir une information ou enregistrer dans un dispositif de mémoire de l'appareil de télécommunications (2),
dans lequel l'appareil de télécommunications (2) est configuré en outre pour la transmission radio sans fil de l'information à l'unité de commande du siège de véhicule (1) ou du véhicule,
dans lequel le siège de véhicule (1) est ainsi configuré qu'en fonction de l'information, le siège de véhicule (1) est réglé électriquement,
dans lequel l'information liée au réglage du siège de véhicule (1) pour l'utilisateur est une information liée à la taille de l'utilisateur, correspond en particulier à la taille de l'utilisateur,
dans lequel l'information liée à la taille de l'utilisateur est la seule information spécifique à l'utilisateur et liée au réglage du siège de véhicule (1) pour l'utilisateur, transmise par l'appareil de télécommunications (2) à l'unité de commande du siège de véhicule ou du véhicule, **caractérisé en ce que** le système comprend un premier élément d'actionnement qui est conçu pour recevoir une saisie d'une information relative à une valeur de la taille de l'utilisateur, dans lequel le premier élément d'actionnement est en outre prévu pour augmenter la valeur de la taille de l'utilisateur, dans lequel le système comprend en outre un second élément d'actionnement qui est prévu pour baisser la valeur de la taille de l'utilisateur.

8. Système selon la revendication 7, **caractérisé en ce que** l'appareil de télécommunications (2) est ainsi configuré qu'outre l'information liée à la taille de l'utilisateur, la saisie d'une information supplémentaire sur l'appareil de télécommunications (2) ou l'enregistrement d'une information supplémentaire dans un dispositif d'enregistrement de l'appareil de télécommunications (2) est effectué(e), dans lequel l'appareil de télécommunications (2) est en outre configuré de telle façon que l'information supplémentaire est spécifique à l'utilisateur et liée au réglage du siège de véhicule (1) pour l'utilisateur et est transmise par l'appareil de télécommunications (2) à l'unité de commande du siège de véhicule ou du véhicule.

9. Système selon la revendication 7 ou 8, **caractérisé en ce que** l'appareil de télécommunications (2) est une clé de véhicule du véhicule ou un terminal de télécommunications portable, en particulier un téléphone intelligent/smartphone.
